# EUROPEAN PATENT APPLICATION

(11) **EP 4 803 392 A1**
(43) Date of publication of application: **09.09.2026**
(21) Application number: 26152664.4
(22) Date of filing: 19.01.2026
(51) Int. Cl.: B60W 30/09, B60W 30/16, B60W 30/18, B60W 50/00

(54) **VEHICLE DRIVING ASSISTANCE APPARATUS**

(30) Priority: 06.03.2025 JP 2025035569
(71) Applicant: TOYOTA JIDOSHA KABUSHIKI KAISHA, Toyota-Shi, Aichi-Ken 471-8571 (JP)
(72) Inventor: OTAKE, Hirotada, TOYOTA-SHI, AICHI, 471-8571 (JP)
(74) Representative: Cabinet Beau de Loménie

(57) **Abstract**

A vehicle driving assistance apparatus (10) executes an autonomous driving control of autonomously driving a host vehicle (100) by alternately executing a propelling control of propelling the host vehicle (100) by a driving force and a coasting control of causing the host vehicle (100) to coast. The vehicle driving assistance apparatus (10) executes the autonomous driving control such that the host vehicle (100) does not decelerate more than a predetermined level when an entry prediction condition, which is satisfied when a moving body exists in a traveling direction of the host vehicle (100) and it is predicted that the moving body (300, 350) enters into a host vehicle traveling lane in which the host vehicle (100) is traveling, is satisfied, or when an entry condition, which is satisfied when the moving body (300, 350) has started to enter into the host vehicle traveling lane, is satisfied.

## Description

### BACKGROUND

### Field

The present invention relates to a vehicle driving assistance apparatus.

### Description of the related art

There is known a vehicle driving assistance apparatus which executes an autonomous driving control of autonomously driving a host vehicle while alternately performing propelling of the host vehicle and coasting of the host vehicle in order to reduce an amount of energy consumed for running the host vehicle. Also, as such a vehicle driving assistance apparatus, there is known a vehicle driving assistance apparatus which drives the host vehicle by the autonomous driving control in accordance with a travel schedule which has been prepared in advance (for example, refer to Japanese Unexamined Patent Application No. 2018-122818).

By the way, since the conventional vehicle driving assistance apparatus drives the host vehicle by the autonomous driving control in accordance with the travel schedule which has been prepared in advance, there may be a case in which the host vehicle is caused to coast even in a situation where another vehicle is waiting in an oncoming lane in front of the host vehicle in order to cross a host vehicle traveling lane (that is, a lane in which the host vehicle is traveling). However, when the host vehicle is caused to coast in such a situation, there is a possibility that a driver of the other vehicle misunderstands that an operator of the host vehicle has permitted the other vehicle to cross. At this time, if the other vehicle enters into the host vehicle traveling lane, the other vehicle may not be able to safely cross the host vehicle traveling lane. Therefore, it can be said that execution of such coasting control is unnecessary.

Also, even when the host vehicle is caused to coast in a situation where another vehicle which has started to enter into the host vehicle traveling lane in order to cross the host vehicle traveling lane exists, there is a possibility that a driver of the other vehicle misunderstands that an operator of the host vehicle has permitted the other vehicle to cross. At this time, if the other vehicle continues to cross the host vehicle traveling lane, the other vehicle may not be able to safely cross the host vehicle traveling lane. Therefore, it can be said that execution of the coasting control is unnecessary.

Such a situation equally applies to a case where a moving body waiting in front of the host vehicle in order to enter into the host vehicle traveling lane exists, or a case where a moving body which has started to enter into the host vehicle traveling lane in order to cross the host vehicle traveling lane exists.

### SUMMARY

An object of the present invention is to provide a vehicle driving assistance apparatus capable of suppressing an occurrence of misunderstanding that an operator of the host vehicle has permitted a moving body to enter into the host vehicle traveling lane, and thereby preventing unnecessary execution of the coasting control.

A vehicle driving assistance apparatus according to the present invention comprises an electronic control unit which executes an autonomous driving control of autonomously driving a host vehicle by alternately executing a propelling control of propelling the host vehicle by a driving force and a coasting control of causing the host vehicle to coast. The electronic control unit is configured to execute the autonomous driving control such that the host vehicle does not decelerate more than a predetermined level when an entry prediction condition, which is satisfied when a moving body exists in a traveling direction of the host vehicle and it is predicted that the moving body enters into a host vehicle traveling lane in which the host vehicle is traveling, is satisfied, or when an entry condition, which is satisfied when the moving body has started to enter into the host vehicle traveling lane, is satisfied.

According to the present invention, for example, when a moving body waiting in front of the host vehicle in order to cross the host vehicle traveling lane exists, great deceleration of the host vehicle is suppressed. Also, for example, when a moving body which has started to enter into the host vehicle traveling lane in order to cross the host vehicle traveling lane exists, great deceleration of the host vehicle is suppressed. Therefore, an occurrence of misunderstanding that an operator of the host vehicle has permitted a moving body to enter into the host vehicle traveling lane is suppressed, and thereby unnecessary execution of the coasting control can be prevented.

In the vehicle driving assistance apparatus according to an aspect of the present invention, the electronic control unit may be configured to control the host vehicle so as not to decelerate more than the predetermined level by not executing the coasting control.

According to this aspect of the present invention, when the entry prediction condition is satisfied or when the entry condition is satisfied, the host vehicle is not caused to coast. Therefore, great deceleration of the host vehicle is suppressed. Accordingly, an occurrence of misunderstanding that an operator of the host vehicle has permitted a moving body to enter into the host vehicle traveling lane can be more reliably suppressed, and thereby unnecessary execution of the coasting control can be prevented.

Further, in the vehicle driving assistance apparatus according to another aspect of the present invention, the electronic control unit may be configured to alternately execute the propelling control and the coasting control such that a traveling speed of the host vehicle or an inter-vehicle distance between the host vehicle and a preceding vehicle falls within a predetermined range of speed or distance during execution of the autonomous driving control, and when the entry prediction condition is satisfied, control the host vehicle so as not to decelerate more than the predetermined level by setting the predetermined range to a narrower range as compared with the predetermined range when the entry prediction condition is not satisfied.

According to this aspect of the present invention, when the entry prediction condition is satisfied, an execution time of the coasting control becomes relatively short. Therefore, great deceleration of the host vehicle is suppressed. Accordingly, an occurrence of misunderstanding that an operator of the host vehicle has permitted a moving body to enter into the host vehicle traveling lane can be more reliably suppressed, and thereby unnecessary execution of the coasting control can be prevented.

Furthermore, in the vehicle driving assistance apparatus according to further another aspect of the present invention, the electronic control unit may be configured to not execute the coasting control when a deceleration rate of the host vehicle caused by execution of the coasting control is equal to or greater than a predetermined deceleration rate threshold, and when the entry prediction condition is satisfied, control the host vehicle so as not to decelerate more than the predetermined level by setting the predetermined deceleration rate threshold to a smaller value as compared with the predetermined deceleration rate threshold when the entry prediction condition is not satisfied.

According to this aspect of the present invention, when the deceleration rate of the host vehicle is great during execution of the coasting control, the coasting control is stopped. Also, when it is predicted that the deceleration rate of the host vehicle when the coasting control is executed is great, the coasting control is not executed. Therefore, great deceleration of the host vehicle is suppressed. Accordingly, an occurrence of misunderstanding that an operator of the host vehicle has permitted a moving body to enter into the host vehicle traveling lane can be more reliably suppressed, and thereby unnecessary execution of the coasting control can be prevented.

Furthermore, in the vehicle driving assistance apparatus according to further another aspect of the present invention, the electronic control unit may be configured to predict that the moving body enters into the host vehicle traveling lane when an entry-possible region into which the moving body can enter exists on an opposite side of the moving body across the host vehicle traveling lane and the moving body moves slowly or stops on the opposite side of the entry-possible region across the host vehicle traveling lane.

According to this aspect of the present invention, for example, in a situation where a moving body such as another vehicle waiting in an oncoming lane in front of the host vehicle in order to cross the host vehicle traveling lane exists, the entry prediction condition is satisfied, and great deceleration of the host vehicle is suppressed. Therefore, in such a situation, an occurrence of misunderstanding that an operator of the host vehicle has permitted a moving body to enter into the host vehicle traveling lane is suppressed, and thereby unnecessary execution of the coasting control can be prevented.

Furthermore, in the vehicle driving assistance apparatus according to further another aspect of the present invention, the electronic control unit may be configured to predict that the moving body enters into the host vehicle traveling lane when the moving body moves slowly toward or stops facing the host vehicle traveling lane in a region adjacent to the host vehicle traveling lane.

According to this aspect of the present invention, for example, in a situation where a moving body such as another vehicle which is trying to enter into the host vehicle traveling lane from a parking lot adjacent to the host vehicle traveling lane exists, the entry prediction condition is satisfied, and great deceleration of the host vehicle is suppressed. Therefore, in such a situation, an occurrence of misunderstanding that an operator of the host vehicle has permitted a moving body to enter into the host vehicle traveling lane is suppressed, and thereby unnecessary execution of the coasting control can be prevented.

The constituent elements of the present invention are not limited to embodiments of the present invention described later with reference to drawings. Other objects, other features, and accompanying advantages of the present invention will be easily understood from the description of the embodiments of the present invention.

### BRIEF DESCRIPTION OF THE DRAWINGS

FIG. 1 is a diagram showing a vehicle driving assistance apparatus according to an embodiment of the present invention.
FIG. 2 is a diagram showing a preceding vehicle.
FIG. 3 is a flowchart showing a routine executed by the vehicle driving assistance apparatus according to the embodiment of the present invention.
FIG. 4 is a flowchart showing a routine executed by the vehicle driving assistance apparatus according to the embodiment of the present invention.
FIG. 5 is a flowchart showing a routine executed by the vehicle driving assistance apparatus according to the embodiment of the present invention.
FIG. 6 is a flowchart showing a routine executed by the vehicle driving assistance apparatus according to the embodiment of the present invention.
FIG. 7 is a diagram showing another vehicle which moves slowly or stops in an oncoming lane.
FIG. 8 is a diagram showing another vehicle which moves slowly or stops in front of a host vehicle traveling lane.
FIG. 9 is a diagram showing another vehicle which moves slowly or stops in front of the host vehicle traveling lane in order to cross a road on which a host vehicle is traveling.
FIG. 10 is a diagram showing a person who stands still in order to cross a road on which the host vehicle is traveling.
FIG. 11 is a diagram showing another vehicle which moves slowly or stops in order to enter into the host vehicle traveling lane from a parking lot.
FIG. 12 is a diagram showing another vehicle which has entered into the host vehicle traveling lane from an oncoming lane.
FIG. 13 is a diagram showing another vehicle which has entered into the host vehicle traveling lane from a road intersecting with a road on which the host vehicle is traveling.
FIG. 14 is a diagram showing a pedestrian who is trying to enter into the host vehicle traveling lane.
FIG. 15 is a diagram showing another vehicle which has entered into the host vehicle traveling lane from a parking lot.
FIG. 16 is a diagram showing an intersection in front of a host vehicle.
FIG. 17 is a flowchart showing a routine executed by the vehicle driving assistance apparatus according to the embodiment of the present invention.
FIG. 18 is a flowchart showing a routine executed by the vehicle driving assistance apparatus according to the embodiment of the present invention.
FIG. 19 is a flowchart showing a routine executed by the vehicle driving assistance apparatus according to the embodiment of the present invention.
FIG. 20 is a flowchart showing a routine executed by the vehicle driving assistance apparatus according to the embodiment of the present invention.

### DETAILED DESCRIPTION

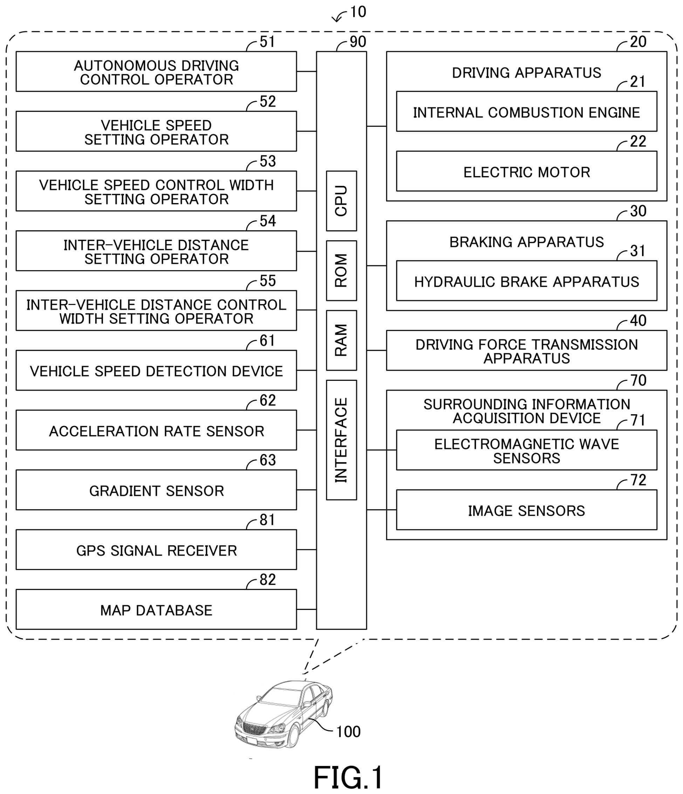

Hereinafter, a vehicle driving assistance apparatus according to an embodiment of the present invention will be described with reference to the drawings. FIG. 1 shows the vehicle driving assistance apparatus 10 according to the embodiment of the present invention. The vehicle driving assistance apparatus 10 is mounted on a host vehicle 100. Hereinafter, the vehicle driving assistance apparatus 10 will be described using, as an example, a case where an operator or a user of the host vehicle 100 is a driver of the host vehicle 100 (that is, a person who drives the host vehicle 100 while boarding the host vehicle 100). However, the operator or the user of the host vehicle 100 may be a remote operator of the host vehicle 100 (that is, a person who drives the host vehicle 100 remotely without boarding the host vehicle 100). It should be noted that, in the following description, the driver of the host vehicle 100 may simply be referred to as "driver."

As shown in FIG. 1, the vehicle driving assistance apparatus 10 includes an ECU (electronic control unit) 90 as a control device. The ECU 90 includes a microcomputer as a main component. The microcomputer includes a CPU, a computer-readable storage medium, and an interface or the like. The storage medium is a ROM, a RAM, or a nonvolatile memory or the like. The CPU realizes various functions by executing instructions, programs, or routines stored in the storage medium. In particular, in this example, the vehicle driving assistance apparatus 10 stores, in the storage medium, programs for realizing various controls executed by the vehicle driving assistance apparatus 10.

It should be noted that, in this example, the vehicle driving assistance apparatus 10 includes only one ECU 90; however, the vehicle driving assistance apparatus 10 may include a plurality of ECUs and may be configured to perform functions of the vehicle driving assistance apparatus 10, which will be described below, by sharing the functions among the respective ECUs.

Also, the vehicle driving assistance apparatus 10 may be configured to be able to update (upgrade) programs stored in the storage medium through wireless communication (for example, Internet communication) with external devices.

Also, the vehicle driving assistance apparatus 10 may be applicable not only to a vehicle which is driven by manual driving by an operator but also to a vehicle which is driven by automatic driving.

As shown in FIG. 1, the host vehicle 100 is equipped with a driving apparatus 20, a braking apparatus 30, and a driving force transmission apparatus 40.

The driving apparatus 20 generates a driving force applied to the host vehicle 100 (in particular, to driven wheels of the host vehicle 100). In this example, the driving apparatus 20 includes an internal combustion engine 21 and at least one electric motor 22. The driving apparatus 20 is electrically connected to the ECU 90. The vehicle driving assistance apparatus 10 controls the driving force applied to the host vehicle 100 by controlling operation of the driving apparatus 20 (that is, the internal combustion engine 21 and the at least one electric motor 22).

The braking apparatus 30 applies a braking force to the host vehicle 100 (in particular, to wheels of the host vehicle 100). In this example, the braking apparatus 30 includes a hydraulic brake apparatus 31. The braking apparatus 30 is electrically connected to the ECU 90. The vehicle driving assistance apparatus 10 controls the braking force applied to the host vehicle 100 by controlling operation of the braking apparatus 30 (more specifically, operation of the hydraulic brake apparatus 31).

The driving force transmission apparatus 40 transmits the driving force output from the driving apparatus 20 to the driven wheels of the host vehicle 100. The driving force transmission apparatus 40 is, for example, a transmission. The driving force transmission apparatus 40 is electrically connected to the ECU 90. The vehicle driving assistance apparatus 10 establishes a driving force transmission path by controlling operation of the driving force transmission apparatus 40, thereby transmitting the driving force output from the driving apparatus 20 to the driven wheels of the host vehicle 100. The driving force transmission path is a path for transmitting the driving force from the driving apparatus 20 to the driven wheels of the host vehicle 100. Also, the vehicle driving assistance apparatus 10 disconnects the driving force transmission path by controlling operation of the driving force transmission apparatus 40, thereby preventing the driving force from the driving apparatus 20 from being transmitted to the driven wheels of the host vehicle 100.

Further, the host vehicle 100 is equipped with an autonomous driving control operator 51, a vehicle speed setting operator 52, a vehicle speed control width setting operator 53, an inter-vehicle distance setting operator 54, an inter-vehicle distance control width setting operator 55, a vehicle speed detection device 61, an acceleration rate sensor 62, a gradient sensor 63, a surrounding information acquisition device 70, a GPS signal receiver 81, and a map database 82.

The autonomous driving control operator 51 is operated by the driver. The driver requests execution or stop of an autonomous driving control described later by operating the autonomous driving control operator 51. The autonomous driving control operator 51 is electrically connected to the ECU 90. When the autonomous driving control operator 51 is operated while the autonomous driving control is not executed, the vehicle driving assistance apparatus 10 determines that the execution of the autonomous driving control is requested. On the other hand, when the autonomous driving control operator 51 is operated while the autonomous driving control is being executed, the vehicle driving assistance apparatus 10 determines that the stop of the autonomous driving control is requested.

The vehicle speed setting operator 52 is operated by the driver. The driver sets a set vehicle speed Vset used in the autonomous driving control described later by operating the vehicle speed setting operator 52. The set vehicle speed Vset is a speed set by the driver as a target value of a host vehicle speed V1. The host vehicle speed V1 is a traveling speed of the host vehicle 100.

The vehicle speed control width setting operator 53 is operated by the driver. The driver sets a set vehicle speed control width WVset by operating the vehicle speed control width setting operator 53. The set vehicle speed control width WVset is used to set a target vehicle speed control width WVtgt used in the autonomous driving control described later.

The inter-vehicle distance setting operator 54 is operated by the driver. The driver sets a set inter-vehicle distance Dset used in the autonomous driving control described later by operating the inter-vehicle distance setting operator 54.

In this example, the driver sets, as the set inter-vehicle distance Dset, one of a long distance, a medium distance, or a short distance by operating the inter-vehicle distance setting operator 54. When a long distance is set as the set inter-vehicle distance Dset, a relatively long distance Dlong is set as the set inter-vehicle distance Dset. Also, when a medium distance is set as the set inter-vehicle distance Dset, a medium distance Dmid is set as the set inter-vehicle distance Dset. Also, when a short distance is set as the set inter-vehicle distance Dset, a relatively short distance Dshort is set.

The set inter-vehicle distance Dset is set to be longer as the host vehicle speed V1 becomes higher. It should be noted that, when the host vehicle speed V1 is the same, the relatively long distance Dlong is longer than the medium distance Dmid. Also, when the host vehicle speed V1 is the same, the medium distance Dmid is longer than the relatively short distance Dshort.

The inter-vehicle distance control width setting operator 55 is operated by the driver. The driver sets a set inter-vehicle distance control width WDset by operating the inter-vehicle distance control width setting operator 55. The set inter-vehicle distance control width WDset is used to set a target inter-vehicle distance control width WDtgt used in the autonomous driving control described later.

The vehicle speed detection device 61 is used for detecting the host vehicle speed V1. The vehicle speed detection device 61 includes, for example, wheel rotation speed sensors provided at respective wheels of the host vehicle 100. The vehicle speed detection device 61 is electrically connected to the ECU 90. The vehicle driving assistance apparatus 10 acquires the host vehicle speed V1 by means of the vehicle speed detection device 61.

The acceleration rate sensor 62 is used for detecting an acceleration rate G. The acceleration rate G is an acceleration rate of the host vehicle 100 in a longitudinal direction of the host vehicle 100. The acceleration rate sensor 62 is electrically connected to the ECU 90. The vehicle driving assistance apparatus 10 acquires the acceleration rate G by means of the acceleration rate sensor 62.

The gradient sensor 63 is used for detecting a road gradient θ. The road gradient θ is a gradient of a road on which the host vehicle 100 is currently traveling. The gradient sensor 63 is electrically connected to the ECU 90. The vehicle driving assistance apparatus 10 acquires the road gradient θ by means of the gradient sensor 63.

The surrounding information acquisition device 70 is used for detecting information on the surroundings of the host vehicle 100. In this example, the surrounding information acquisition device 70 includes a plurality of electromagnetic wave sensors 71 and a plurality of image sensors 72.

The electromagnetic wave sensor 71 is electrically connected to the ECU 90. The electromagnetic wave sensor 71 is, for example, a radar sensor such as a millimeter-wave radar. The vehicle driving assistance apparatus 10 acquires, as surrounding information IS, information (object information IO) on objects existing around the host vehicle 100 by means of the electromagnetic wave sensors 71. In particular, the object information IO includes information on moving bodies such as vehicles including a preceding vehicle 200, motorcycles, bicycles, and persons.

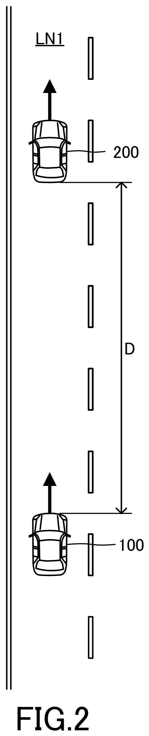

As shown in FIG. 2, the preceding vehicle 200 is another vehicle which is traveling in a host vehicle traveling lane LN1 in front of the host vehicle 100 and exists within a predetermined distance Dp in front of the host vehicle 100. The host vehicle traveling lane LN1 is a lane in which the host vehicle 100 is traveling. The preceding vehicle 200 is detected based on the surrounding information IS.

The image sensor 72 is electrically connected to the ECU 90. The image sensor 72 is, for example, a camera sensor. The vehicle driving assistance apparatus 10 acquires, as the surrounding information IS, image information IC on the surroundings of the host vehicle 100 by the image sensors 72. In particular, the image information IC includes information on moving bodies such as vehicles including the preceding vehicle 200, motorcycles, bicycles, and persons.

The GPS signal receiver 81 receives GPS signals. The GPS signal receiver 81 is electrically connected to the ECU 90. The vehicle driving assistance apparatus 10 receives GPS signals via the GPS signal receiver 81. The vehicle driving assistance apparatus 10 acquires a current position of the host vehicle 100 based on the GPS signals.

The map database 82 stores map information IM. The map database 82 is electrically connected to the ECU 90. The vehicle driving assistance apparatus 10 acquires road information IR from a current position of the host vehicle 100 and the map information IM. The road information IR is information on a road on which the host vehicle 100 is traveling. In particular, the road information IR includes information on intersections, etc. existing on the road on which the host vehicle 100 is traveling.

### <Operation of Vehicle Driving Assistance Apparatus>

Next, operation of the vehicle driving assistance apparatus 10 will be described.

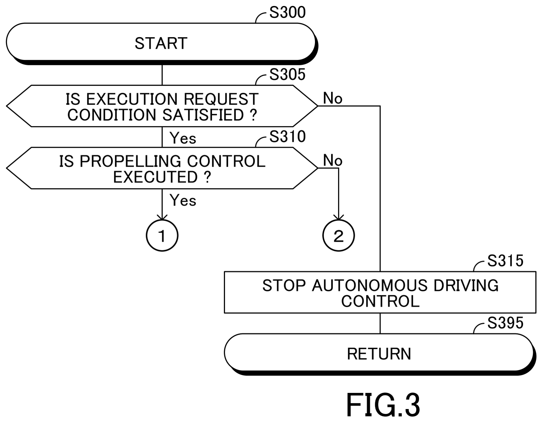

The vehicle driving assistance apparatus 10 executes the routines shown in FIGS. 3 to 6 at predetermined time intervals, and executes an autonomous driving control when a predetermined condition is satisfied. The autonomous driving control is control of autonomously driving the host vehicle 100 by alternately executing a propelling control and a coasting control.

The propelling control includes a propelling acceleration control and a propelling maintaining control. The propelling acceleration control is a propelling control of propelling the host vehicle 100 by the driving force such that the host vehicle 100 is accelerated. Also, the propelling maintaining control is a propelling control of propelling the host vehicle 100 by the driving force such that the host vehicle speed V1 is maintained at the host vehicle speed V1 at the start of the propelling maintaining control or an inter-vehicle distance D is maintained at the inter-vehicle distance D at the start of the propelling maintaining control.

The propelling control is control of propelling the host vehicle 100 by the driving force. The vehicle driving assistance apparatus 10 propels the host vehicle 100 by the driving force by applying the driving force from the driving apparatus 20 to the host vehicle 100 during execution of the propelling control. It should be noted that an optimum propelling control may be adopted as the propelling control. The optimum propelling control is control of propelling the host vehicle 100 by the driving force by applying the driving force from the driving apparatus 20 to the host vehicle 100 while controlling operation of the driving apparatus 20 such that a driving energy efficiency becomes the highest. The driving energy efficiency is an energy efficiency when the driving apparatus 20 generates the driving force.

The coasting control is control of causing the host vehicle 100 to coast. The vehicle driving assistance apparatus 10 causes the host vehicle 100 to coast by stopping application of the driving force from the driving apparatus 20 to the host vehicle 100 during execution of the coasting control. In this example, the vehicle driving assistance apparatus 10 stops the application of the driving force from the driving apparatus 20 to the host vehicle 100 by cutting off the driving force transmission path during execution of the coasting control. As described above, the driving force transmission path is a path for applying the driving force from the driving apparatus 20 to the host vehicle 100. The vehicle driving assistance apparatus 10 cuts off the driving force transmission path by controlling operation of the driving force transmission apparatus 40.

Also, the autonomous driving control includes an autonomous vehicle speed control and an autonomous inter-vehicle distance control.

When a preceding vehicle 200 exists as shown in FIG. 2, the vehicle driving assistance apparatus 10 executes the autonomous inter-vehicle distance control as the autonomous driving control. On the other hand, when the preceding vehicle 200 does not exist, the vehicle driving assistance apparatus 10 executes the autonomous vehicle speed control as the autonomous driving control.

The autonomous vehicle speed control is control of autonomously driving the host vehicle 100 by alternately executing the propelling control and the coasting control such that the host vehicle speed V1 is maintained within a predetermined range (that is, a target vehicle speed range RVtgt). Therefore, the vehicle driving assistance apparatus 10 alternately executes the propelling control and the coasting control such that the host vehicle speed V1 falls within a predetermined range (that is, the target vehicle speed range RVtgt) during execution of the autonomous vehicle speed control.

During execution of the autonomous vehicle speed control, when the host vehicle speed V1 increases by the propelling control and reaches a target upper limit speed Vtgt_max, the vehicle driving assistance apparatus 10 ends the propelling control and starts the coasting control. The target upper limit speed Vtgt_max is an upper limit value of the target vehicle speed range RVtgt. In this example, the set vehicle speed Vset is set as the target upper limit speed Vtgt_max (Vtgt_max = Vset).

On the other hand, during execution of the autonomous vehicle speed control, when the host vehicle speed V1 decreases by the coasting control and reaches a target lower limit speed Vtgt_min, the vehicle driving assistance apparatus 10 ends the coasting control and starts the propelling control. The target lower limit speed Vtgt_min is a lower limit value of the target vehicle speed range RVtgt. The target lower limit speed Vtgt_min is a speed obtained by subtracting a target vehicle speed control width WVtgt from the set vehicle speed Vset.

The autonomous inter-vehicle distance control is control of autonomously driving the host vehicle 100 by alternately executing the propelling control and the coasting control such that the inter-vehicle distance D is maintained within a target inter-vehicle distance range RDtgt. The inter-vehicle distance D is a distance between the host vehicle 100 and the preceding vehicle 200. The inter-vehicle distance D is acquired based on the surrounding information IS. Therefore, the vehicle driving assistance apparatus 10 alternately executes the propelling control and the coasting control such that the inter-vehicle distance D falls within a predetermined range (that is, the target inter-vehicle distance range RDtgt) during execution of the autonomous inter-vehicle distance control.

During execution of the autonomous inter-vehicle distance control, when the inter-vehicle distance D becomes shorter by the propelling control and reaches a target lower limit inter-vehicle distance Dtgt_min, the vehicle driving assistance apparatus 10 ends the propelling control and starts the coasting control. The target lower limit inter-vehicle distance Dtgt_min is a lower limit value of the target inter-vehicle distance range RDtgt. In this example, the set inter-vehicle distance Dset is set as the target lower limit inter-vehicle distance Dtgt_min (Dtgt_min = Dset).

On the other hand, during execution of the autonomous inter-vehicle distance control, when the inter-vehicle distance D becomes longer by the coasting control and reaches a target upper limit inter-vehicle distance Dtgt_max, the vehicle driving assistance apparatus 10 ends the coasting control and starts the propelling control. The target upper limit inter-vehicle distance Dtgt_max is an upper limit value of the target inter-vehicle distance range RDtgt. In this example, a value obtained by adding a target inter-vehicle distance control width WDtgt to the target lower limit inter-vehicle distance Dtgt_min is set as the target upper limit inter-vehicle distance Dtgt_max (Dtgt_max = Dtgt_min + WDtgt).

It should be noted that, during execution of the propelling control, when the host vehicle speed V1 reaches the target upper limit speed Vtgt_max before the inter-vehicle distance D reaches the target lower limit inter-vehicle distance Dtgt_min, the propelling maintaining control is continued such that the host vehicle speed V1 is maintained at the target upper limit speed Vtgt_max. Also, during execution of the coasting control, when the host vehicle speed V1 reaches the target lower limit speed Vtgt_min before the inter-vehicle distance D reaches the target upper limit inter-vehicle distance Dtgt_max, the coasting control is ended, and the propelling control is executed such that the host vehicle speed V1 is maintained at the target lower limit speed Vtgt_min.

Therefore, the autonomous inter-vehicle distance control can also be said to be control of autonomously driving the host vehicle 100 by alternately executing the propelling control and the coasting control such that the host vehicle speed V1 is maintained within a range between the target upper limit speed Vtgt_max and the target lower limit speed Vtgt_min.

At a predetermined timing, the vehicle driving assistance apparatus 10 starts processing from a step S300 of the routine shown in FIG. 3. Then, the vehicle driving assistance apparatus 10 proceeds with the process to a step S305 to determine whether or not an execution request condition C1 is satisfied.

The execution request condition C1 is satisfied when the execution of the autonomous driving control is requested.

When the execution request condition C1 is satisfied, the vehicle driving assistance apparatus 10 determines "Yes" at the step S305 and proceeds with the process to a step S310 to determine whether or not the propelling control is being executed.

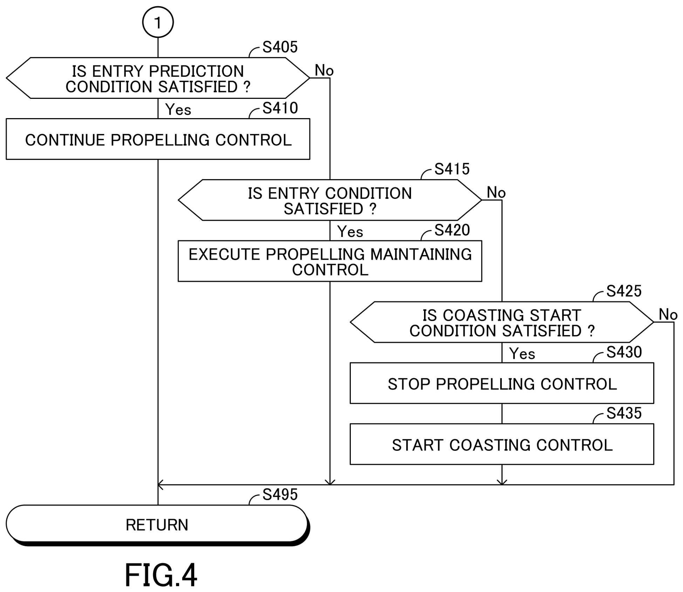

When the propelling control is being executed, the vehicle driving assistance apparatus 10 determines "Yes" at the step S310 and proceeds with the process to a step S405 shown in FIG. 4 to determine whether or not an entry prediction condition C2 is satisfied.

The entry prediction condition C2 is satisfied when a moving body which is going to enter into the host vehicle traveling lane LN1 from a position other than a position in the host vehicle traveling lane LN1 exists in a region within a predetermined distance Dth in front of the host vehicle 100. In other words, the entry prediction condition C2 is satisfied when a moving body exists in a traveling direction of the host vehicle 100 and it is predicted that the moving body enters into the host vehicle traveling lane LN1.

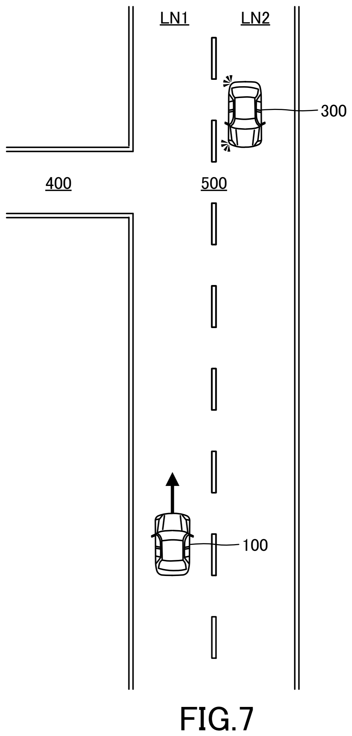

For example, the entry prediction condition C2 is satisfied when another vehicle 300 moving slowly or stopping exists in an oncoming lane LN2 at a position in front of an intersecting road 400 of a target intersection 500 as shown in FIG. 7. In particular, the entry prediction condition C2 is satisfied when another vehicle 300 moving slowly or stopping while flashing turn signals in a direction to enter into the host vehicle traveling lane LN1 exists in the oncoming lane LN2 at the position in front of the intersecting road 400 of the target intersection 500. In other words, the entry prediction condition C2 is satisfied when another vehicle 300 moving slowly or stopping exists in the oncoming lane LN2 at the position in front of the intersecting road 400 of the target intersection 500 in order to enter into the host vehicle traveling lane LN1.

It should be noted that the target intersection 500 is an intersection which exists at a point within the predetermined distance Dth in front of the host vehicle 100. Also, the intersecting road 400 is a road which intersects the host vehicle traveling lane LN1 at the target intersection 500.

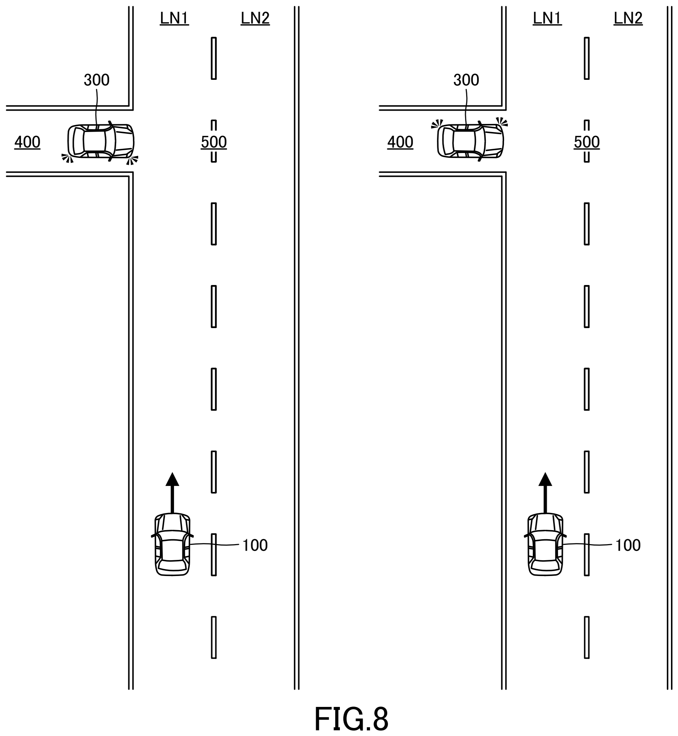

Alternatively, the entry prediction condition C2 is satisfied when another vehicle 300 moving slowly or stopping exists on the intersecting road 400 of the target intersection 500 as shown in FIG. 8. In particular, the entry prediction condition C2 is satisfied when another vehicle 300 moving slowly or stopping while flashing a turn signal in a direction to enter into the host vehicle traveling lane LN1 exists on the intersecting road 400 of the target intersection 500. In other words, the entry prediction condition C2 is satisfied when another vehicle 300 moving slowly or stopping exists on the intersecting road 400 of the target intersection 500 in order to enter into the host vehicle traveling lane LN1.

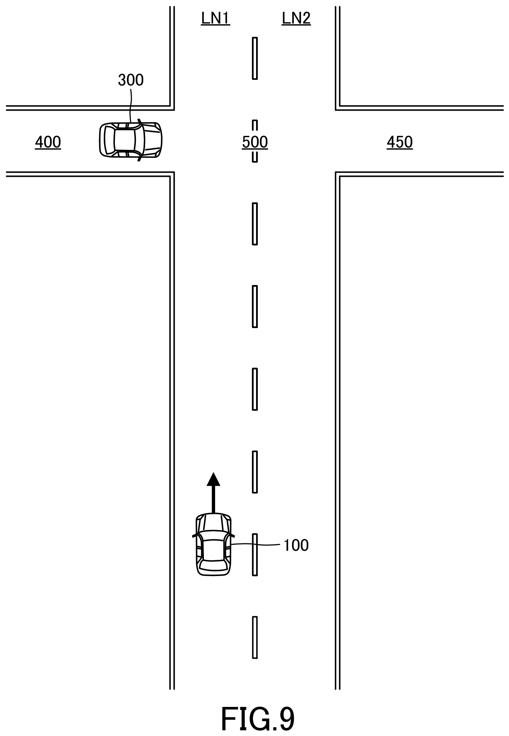

Alternatively, the entry prediction condition C2 is satisfied when another vehicle 300 moving slowly or stopping without flashing turn signals exists on the intersecting road 400 of the target intersection 500 as shown in FIG. 9. At the target intersection 500 here, another road 450 exists across the host vehicle traveling lane LN1 from the intersecting road 400.

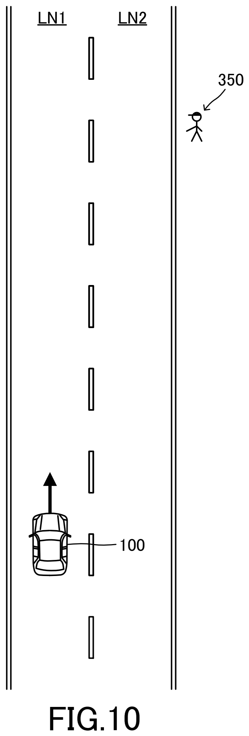

Alternatively, the entry prediction condition C2 is satisfied when a person 350 who stands still or a bicycle which stops exists at a roadside such as a sidewalk within the predetermined distance Dth in front of the host vehicle 100 as shown in FIG. 10. In other words, the entry prediction condition C2 is satisfied when a person 350 who stands still or a bicycle which stops exists at a roadside such as a sidewalk within the predetermined distance Dth in front of the host vehicle 100 in order to enter into the host vehicle traveling lane LN1.

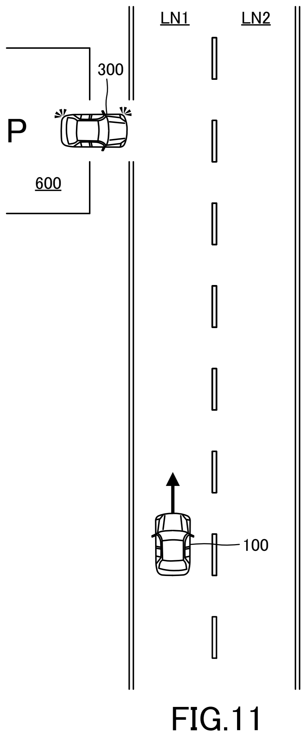

Alternatively, the entry prediction condition C2 is satisfied when another vehicle 300 moving slowly or stopping exists from a parking lot 600 of a store or the like within the predetermined distance Dth in front of the host vehicle 100 in order to enter into the host vehicle traveling lane LN1 as shown in FIG. 11.

It should be noted that the vehicle driving assistance apparatus 10 determines whether or not the entry prediction condition C2 is satisfied based on the surrounding information IS. Alternatively, the vehicle driving assistance apparatus 10 determines whether or not the entry prediction condition C2 is satisfied based on the surrounding information IS and the road information IR.

As described above, for example, as shown in FIG. 7, when an entry-possible region (for example, the intersecting road 400) into which the other vehicle 300 can enter exists on an opposite side of the other vehicle 300 across the host vehicle traveling lane LN1, and the other vehicle 300 moves slowly or stops on an opposite side of the entry-possible region across the host vehicle traveling lane LN1, the vehicle driving assistance apparatus 10 predicts that the other vehicle 300 enters into the host vehicle traveling lane LN1.

Alternatively, for example, as shown in FIG. 8, when the other vehicle 300 moves slowly toward or stops facing the host vehicle traveling lane LN1 in an area (for example, the intersecting road 400) adjacent to the host vehicle traveling lane LN1, the vehicle driving assistance apparatus 10 predicts that the other vehicle 300 enters into the host vehicle traveling lane LN1.

When the entry prediction condition C2 is satisfied, the vehicle driving assistance apparatus 10 determines "Yes" at the step S405 and proceeds with the process to a step S410 to continue the propelling control. That is, when the entry prediction condition C2 is satisfied, the vehicle driving assistance apparatus 10 does not execute the coasting control. According to this, it is suppressed that the host vehicle 100 decelerates more than a predetermined level. Therefore, when the entry prediction condition C2 is satisfied, the vehicle driving assistance apparatus 10 executes the autonomous driving control such that the host vehicle 100 does not decelerate more than the predetermined level. In particular, when the entry prediction condition C2 is satisfied, the vehicle driving assistance apparatus 10 executes the autonomous driving control such that the host vehicle 100 does not decelerate more than the predetermined level by not executing the coasting control.

Next, the vehicle driving assistance apparatus 10 proceeds with the process to a step S495 to terminate the process of this routine once.

It should be noted that, in a situation where the vehicle driving assistance apparatus 10 has executed the propelling acceleration control of the autonomous vehicle speed control at the time when it proceeds with the process to the step S410, the vehicle driving assistance apparatus 10 executes the autonomous driving control as follows. That is, while the entry prediction condition C2 is satisfied, the vehicle driving assistance apparatus 10 continues the propelling acceleration control until the host vehicle speed V1 reaches the target upper limit speed Vtgt_max. Then, when the host vehicle speed V1 reaches the target upper limit speed Vtgt_max, the vehicle driving assistance apparatus 10 switches the propelling acceleration control to the propelling maintaining control.

On the other hand, in a situation where the vehicle driving assistance apparatus 10 has executed the propelling acceleration control of the autonomous inter-vehicle distance control at the time when it proceeds with the process to the step S410, the vehicle driving assistance apparatus 10 executes the autonomous driving control as follows. That is, while the entry prediction condition C2 is satisfied, the vehicle driving assistance apparatus 10 continues the propelling acceleration control until the inter-vehicle distance D reaches the target lower limit inter-vehicle distance Dtgt_min. Then, when the inter-vehicle distance D reaches the target lower limit inter-vehicle distance Dtgt_min, the vehicle driving assistance apparatus 10 switches the propelling acceleration control to the propelling maintaining control.

It should be noted that, in a situation where the vehicle driving assistance apparatus 10 has already executed the propelling maintaining control at the time when it proceeds with the process to the step S410, while the entry prediction condition C2 is satisfied, the vehicle driving assistance apparatus 10 continues the propelling maintaining control.

Also, when the vehicle driving assistance apparatus 10 proceeds with the process to the step S410 for the first time, the vehicle driving assistance apparatus 10 may start the propelling maintaining control.

On the other hand, when the entry prediction condition C2 is not satisfied, the vehicle driving assistance apparatus 10 proceeds with the process to a step S415 to determine whether or not an entry condition C3 is satisfied.

The entry condition C3 is satisfied when a moving body which has entered into the host vehicle traveling lane LN1 exists in a region within the predetermined distance Dth in front of the host vehicle 100. In other words, the entry condition C3 is satisfied when a moving body has started to enter into the host vehicle traveling lane LN1.

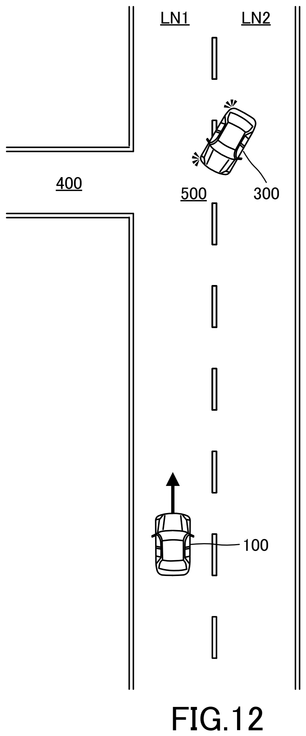

For example, the entry condition C3 is satisfied when another vehicle 300 which has entered into the host vehicle traveling lane LN1 from the oncoming lane LN2 to enter into the intersecting road 400 of the target intersection 500 exists as shown in FIG. 12.

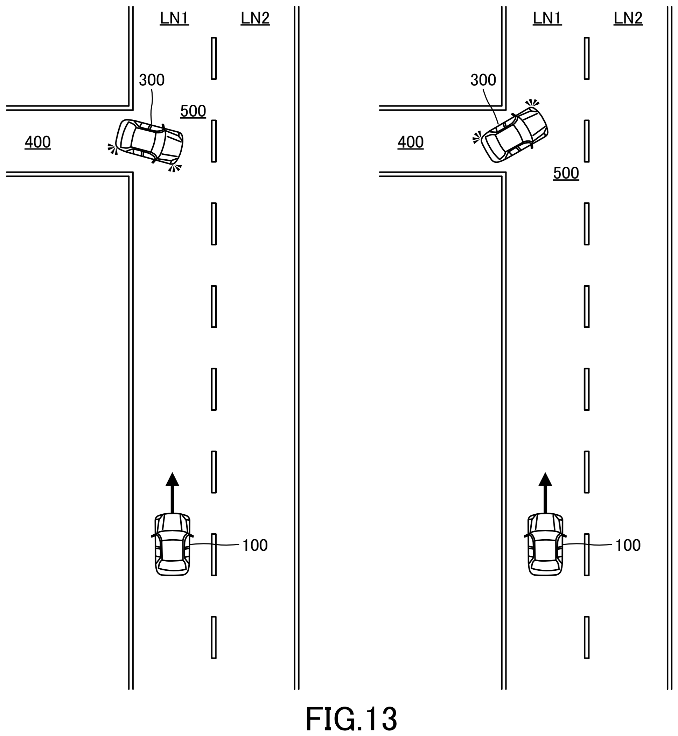

Alternatively, the entry condition C3 is satisfied when another vehicle 300 which has entered into the host vehicle traveling lane LN1 from the intersecting road 400 of the target intersection 500 exists as shown in FIG. 13.

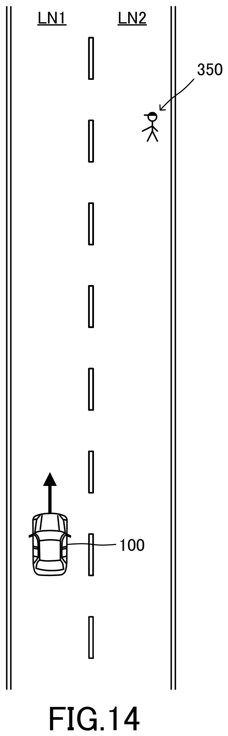

Alternatively, the entry condition C3 is satisfied when a person 350 or a bicycle which has entered into the host vehicle traveling lane LN1 from a roadside such as a sidewalk within the predetermined distance Dth in front of the host vehicle 100 exists as shown in FIG. 14.

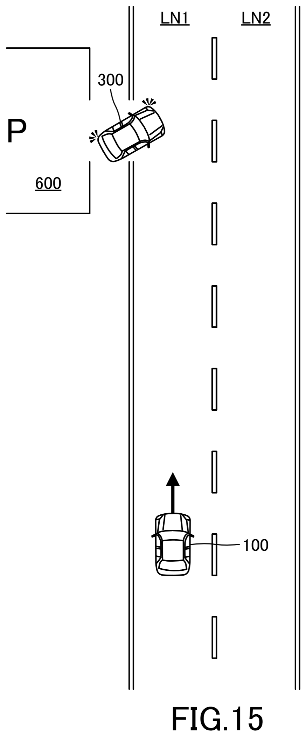

Alternatively, the entry condition C3 is satisfied when another vehicle 300 which has entered into the host vehicle traveling lane LN1 from a parking lot 600 of a store within the predetermined distance Dth in front of the host vehicle 100 exists as shown in FIG. 15.

It should be noted that the vehicle driving assistance apparatus 10 determines whether or not the entry condition C3 is satisfied based on the surrounding information IS. Alternatively, the vehicle driving assistance apparatus 10 determines whether or not the entry condition C3 is satisfied based on the surrounding information IS and the road information IR.

When the entry condition C3 is satisfied, the vehicle driving assistance apparatus 10 determines "Yes" at the step S415 and proceeds with the process to a step S420. In a situation where the vehicle driving assistance apparatus 10 has executed the propelling acceleration control at the time when it proceeds with the process to the step S420, the vehicle driving assistance apparatus 10 switches the propelling acceleration control to the propelling maintaining control at the step S420. On the other hand, in a situation where the vehicle driving assistance apparatus 10 has already executed the propelling maintaining control at the time when it proceeds with the process to the step S420, the vehicle driving assistance apparatus 10 continues the propelling maintaining control at the step S420. That is, while the entry condition C3 is satisfied, the vehicle driving assistance apparatus 10 continues the propelling maintaining control.

That is, when the entry condition C3 is satisfied, the vehicle driving assistance apparatus 10 does not execute the coasting control. According to this, it is suppressed that the host vehicle 100 decelerates more than a predetermined level. Therefore, when the entry condition C3 is satisfied, the vehicle driving assistance apparatus 10 executes the autonomous driving control such that the host vehicle 100 does not decelerate more than the predetermined level. In particular, when the entry condition C3 is satisfied, the vehicle driving assistance apparatus 10 executes the autonomous driving control such that the host vehicle 100 does not decelerate more than the predetermined level by not executing the coasting control.

Next, the vehicle driving assistance apparatus 10 proceeds with the process to the step S495 to terminate the process of this routine once.

On the other hand, when the entry condition C3 is not satisfied, the vehicle driving assistance apparatus 10 determines "No" at the step S415 and proceeds with the process to a step S425 to determine whether or not a coasting start condition C4 is satisfied.

The coasting start condition C4 is satisfied when the host vehicle speed V1 increases and reaches the target upper limit speed Vtgt_max in a situation where the preceding vehicle 200 does not exist. On the other hand, in a situation where the preceding vehicle 200 exists, the coasting start condition C4 is satisfied when the inter-vehicle distance D becomes shorter and reaches the target lower limit inter-vehicle distance Dtgt_min.

When the coasting start condition C4 is not satisfied, the vehicle driving assistance apparatus 10 determines "No" at the step S425 and proceeds with the process directly to the step S495 to terminate the process of this routine once. In this case, the propelling control is continued. On the other hand, when the coasting start condition C4 is satisfied, the vehicle driving assistance apparatus 10 determines "Yes" at the step S425 and proceeds with the process to a step S430 to stop the propelling control. Next, the vehicle driving assistance apparatus 10 proceeds with the process to a step S435 to start the coasting control. Next, the vehicle driving assistance apparatus 10 proceeds with the process to the step S495 to terminate the process of this routine once.

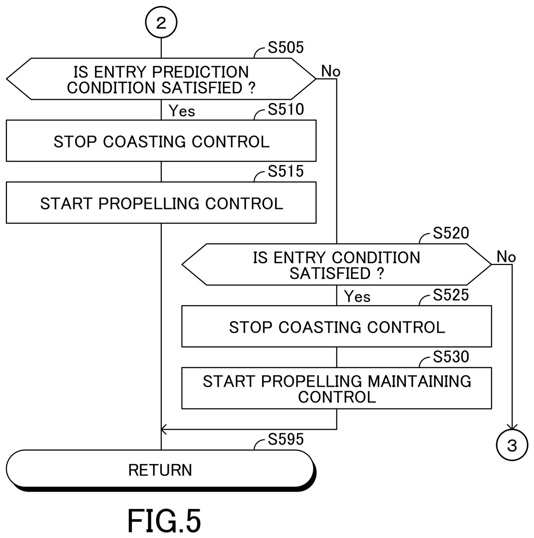

Also, in a situation where the vehicle driving assistance apparatus 10 does not execute the propelling control at the time when it proceeds with the process to the step S310 shown in FIG. 3, the vehicle driving assistance apparatus 10 determines "No" at the step S310 and proceeds with the process to a step S505 shown in FIG. 5 to determine whether or not the entry prediction condition C2 is satisfied.

When the entry prediction condition C2 is satisfied, the vehicle driving assistance apparatus 10 determines "Yes" at the step S505 and proceeds with the process to a step S510 to stop the coasting control. Next, the vehicle driving assistance apparatus 10 proceeds with the process to a step S515 to start the propelling control. That is, when the entry prediction condition C2 is satisfied, the vehicle driving assistance apparatus 10 stops the coasting control. According to this, it is suppressed that the host vehicle 100 decelerates more than a predetermined level. Therefore, when the entry prediction condition C2 is satisfied, the vehicle driving assistance apparatus 10 executes the autonomous driving control such that the host vehicle 100 does not decelerate more than the predetermined level. In particular, when the entry prediction condition C2 is satisfied, the vehicle driving assistance apparatus 10 executes the autonomous driving control such that the host vehicle 100 does not decelerate more than the predetermined level by not executing the coasting control.

Next, the vehicle driving assistance apparatus 10 proceeds with the process to a step S595 to terminate the process of this routine once.

It should be noted that, when the vehicle driving assistance apparatus 10 starts the propelling control at the step S515, the propelling acceleration control is first started. In a situation where the vehicle driving assistance apparatus 10 executes the autonomous vehicle speed control, while the entry prediction condition C2 is satisfied, the vehicle driving assistance apparatus 10 continues the propelling acceleration control until the host vehicle speed V1 reaches the target upper limit speed Vtgt_max. Then, when the host vehicle speed V1 reaches the target upper limit speed Vtgt_max, the vehicle driving assistance apparatus 10 switches the propelling acceleration control to the propelling maintaining control. On the other hand, in a situation where the vehicle driving assistance apparatus 10 executes the autonomous inter-vehicle distance control, while the entry prediction condition C2 is satisfied, the vehicle driving assistance apparatus 10 continues the propelling acceleration control until the inter-vehicle distance D reaches the target lower limit inter-vehicle distance Dtgt_min. Then, when the inter-vehicle distance D reaches the target lower limit inter-vehicle distance Dtgt_min, the vehicle driving assistance apparatus 10 switches the propelling acceleration control to the propelling maintaining control.

Also, when the vehicle driving assistance apparatus 10 proceeds with the process to the step S515 for the first time, the vehicle driving assistance apparatus 10 may start the propelling maintaining control.

On the other hand, when the entry prediction condition C2 is not satisfied, the vehicle driving assistance apparatus 10 determines "No" at the step S505 and proceeds with the process to a step S520 to determine whether or not the entry condition C3 is satisfied.

When the entry condition C3 is satisfied, the vehicle driving assistance apparatus 10 determines "Yes" at the step S520 and proceeds with the process to a step S525 to stop the coasting control. Next, the vehicle driving assistance apparatus 10 proceeds with the process to a step S530 to start the propelling maintaining control. While the entry condition C3 is satisfied, the vehicle driving assistance apparatus 10 continues the propelling maintaining control.

That is, when the entry condition C3 is satisfied, the vehicle driving assistance apparatus 10 stops the coasting control. According to this, it is suppressed that the host vehicle 100 decelerates more than a predetermined level. Therefore, when the entry condition C3 is satisfied, the vehicle driving assistance apparatus 10 executes the autonomous driving control such that the host vehicle 100 does not decelerate more than the predetermined level. In particular, when the entry condition C3 is satisfied, the vehicle driving assistance apparatus 10 executes the autonomous driving control such that the host vehicle 100 does not decelerate more than the predetermined level by not executing the coasting control.

Next, the vehicle driving assistance apparatus 10 proceeds with the process to the step S595 to terminate the process of this routine once.

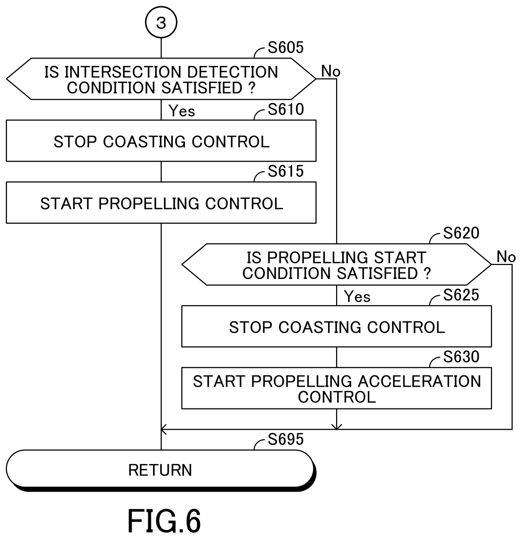

On the other hand, when the entry condition C3 is not satisfied, the vehicle driving assistance apparatus 10 determines "No" at the step S520 and proceeds with the process to a step S605 shown in FIG. 6 to determine whether or not an intersection detection condition C5 is satisfied.

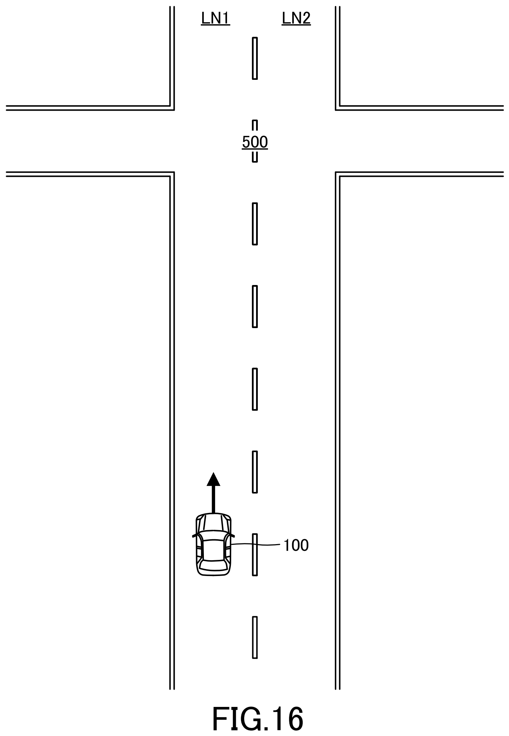

The intersection detection condition C5 is satisfied when a target intersection 500 exists as shown in FIG. 16.

It should be noted that the vehicle driving assistance apparatus 10 determines whether or not the intersection detection condition C5 is satisfied based on the surrounding information IS. Alternatively, the vehicle driving assistance apparatus 10 determines whether or not the intersection detection condition C5 is satisfied based on the surrounding information IS and the road information IR.

When the intersection detection condition C5 is satisfied, the vehicle driving assistance apparatus 10 determines "Yes" at the step S605 and proceeds with the process to a step S610 to stop the coasting control. Next, the vehicle driving assistance apparatus 10 proceeds with the process to a step S615 to start the propelling control. Next, the vehicle driving assistance apparatus 10 proceeds with the process to a step S695 to terminate the process of this routine once.

It should be noted that, when the vehicle driving assistance apparatus 10 starts the propelling control at the step S615, the propelling acceleration control is first started. In a situation where the vehicle driving assistance apparatus 10 executes the autonomous vehicle speed control, while the intersection detection condition C5 is satisfied, the vehicle driving assistance apparatus 10 continues the propelling acceleration control until the host vehicle speed V1 reaches the target upper limit speed Vtgt_max. Then, when the host vehicle speed V1 reaches the target upper limit speed Vtgt_max, the vehicle driving assistance apparatus 10 switches the propelling acceleration control to the propelling maintaining control. On the other hand, in a situation where the vehicle driving assistance apparatus 10 executes the autonomous inter-vehicle distance control, while the intersection detection condition C5 is satisfied, the vehicle driving assistance apparatus 10 continues the propelling acceleration control until the inter-vehicle distance D reaches the target lower limit inter-vehicle distance Dtgt_min. Then, when the inter-vehicle distance D reaches the target lower limit inter-vehicle distance Dtgt_min, the vehicle driving assistance apparatus 10 switches the propelling acceleration control to the propelling maintaining control.

Also, at the time when the vehicle driving assistance apparatus 10 proceeds with the process to the step S615 for the first time, the vehicle driving assistance apparatus 10 may start the propelling maintaining control.

On the other hand, when the intersection detection condition C5 is not satisfied, the vehicle driving assistance apparatus 10 determines "No" at the step S605 and proceeds with the process to a step S620 to determine whether or not a propelling start condition C6 satisfies.

The propelling start condition C6 is satisfied when the host vehicle speed V1 decreases and reaches the target lower limit speed Vtgt_min in a situation where the preceding vehicle 200 does not exist. On the other hand, in a situation where the preceding vehicle 200 exists, the propelling start condition C6 is satisfied when the inter-vehicle distance D becomes longer and reaches the target upper limit inter-vehicle distance Dtgt_max.

When the propelling start condition C6 is not satisfied, the vehicle driving assistance apparatus 10 determines "No" at the step S620 and proceeds with the process directly to the step S695 to terminate the process of this routine once. In this case, the coasting control is continued. On the other hand, when the propelling start condition C6 is satisfied, the vehicle driving assistance apparatus 10 determines "Yes" at the step S620 and proceeds with the process to a step S625 to stop the coasting control. Next, the vehicle driving assistance apparatus 10 proceeds with the process to a step S630 to start the propelling acceleration control. Next, the vehicle driving assistance apparatus 10 proceeds with the process to the step S695 to terminate the process of this routine once.

The above is the operation of the vehicle driving assistance apparatus 10.

In a situation where another vehicle 300 waiting in the oncoming lane LN2 in front of the host vehicle 100 in order to cross the host vehicle traveling lane LN1 exists, if the host vehicle 100 is caused to coast, there is a possibility that a driver of the other vehicle 300 misunderstands that the driver of the host vehicle 100 has permitted the other vehicle 300 to cross. At this time, if the other vehicle 300 enters into the host vehicle traveling lane LN1, the other vehicle 300 may not be able to safely cross the host vehicle traveling lane LN1.

Also, in a situation where another vehicle 300 which has started to enter into the host vehicle traveling lane LN1 in order to cross the host vehicle traveling lane LN1 exists, if the host vehicle 100 is caused to coast, there is a possibility that a driver of the other vehicle 300 misunderstands that the driver of the host vehicle 100 has permitted the other vehicle 300 to cross. At this time, if the other vehicle 300 continues to cross the host vehicle traveling lane LN1, the other vehicle 300 may not be able to safely cross the host vehicle traveling lane LN1.

According to the vehicle driving assistance apparatus 10, for example, when another vehicle 300 waiting in front of the host vehicle 100 in order to cross the host vehicle traveling lane LN1 exists, it is suppressed that the host vehicle 100 greatly decelerates. Also, for example, when another vehicle 300 which has started to enter into the host vehicle traveling lane LN1 in order to cross the host vehicle traveling lane LN1 exists, it is suppressed that the host vehicle 100 greatly decelerates. Therefore, an occurrence of misunderstanding that the driver of the host vehicle 100 has permitted the other vehicle 300 to enter into the host vehicle traveling lane LN1 is suppressed, and thereby unnecessary execution of the coasting control can be prevented.

It should be noted that the present invention is not limited to the above embodiment, and various modified examples can be adopted within a scope of the present invention.

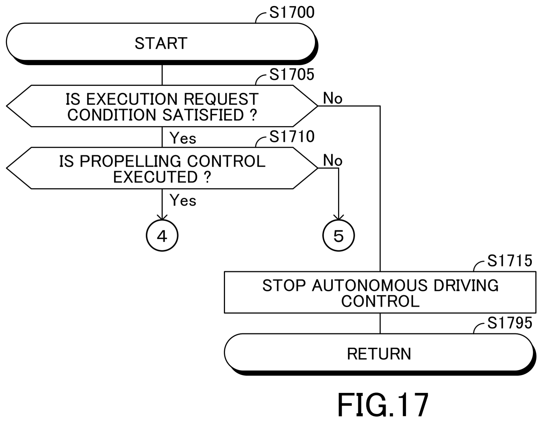

For example, instead of executing the routines shown in FIG. 3 to FIG. 6, the vehicle driving assistance apparatus 10 may be configured to execute the routines shown in FIG. 17 to FIG. 20 at predetermined time intervals. In this case, at a predetermined timing, the vehicle driving assistance apparatus 10 starts processing from a step S1700 of the routine shown in FIG. 17. Then, the vehicle driving assistance apparatus 10 proceeds with the process to a step S1705 to determine whether or not the execution request condition C1 is satisfied.

When the execution request condition C1 is satisfied, the vehicle driving assistance apparatus 10 determines "Yes" at the step S1705 and proceeds with the process to a step S1710 to determine whether or not the propelling control is being executed.

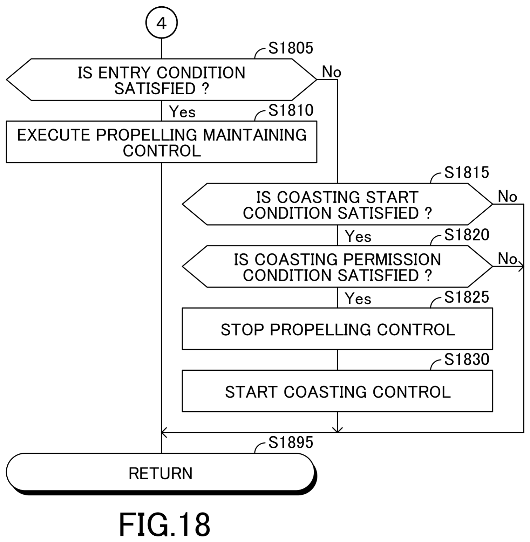

When the propelling control is being executed, the vehicle driving assistance apparatus 10 determines "Yes" at the step S1710 and proceeds with the process to a step S1805 shown in FIG. 18 to determine whether or not the entry condition C3 is satisfied.

When the entry condition C3 is satisfied, the vehicle driving assistance apparatus 10 determines "Yes" at the step S1805 and proceeds with the process to a step S1810. In a situation where the vehicle driving assistance apparatus 10 has executed the propelling acceleration control at the time when it proceeds with the process to the step S1810, the vehicle driving assistance apparatus 10 switches the propelling acceleration control to the propelling maintaining control at the step S1810. On the other hand, in a situation where the vehicle driving assistance apparatus 10 has already executed the propelling maintaining control at the time when it proceeds with the process to the step S1810, the vehicle driving assistance apparatus 10 continues the propelling maintaining control at the step S1810. That is, while the entry condition C3 is satisfied, the vehicle driving assistance apparatus 10 continues the propelling maintaining control.

That is, when the entry condition C3 is satisfied, the vehicle driving assistance apparatus 10 does not execute the coasting control. According to this, it is suppressed that the host vehicle 100 decelerates more than a predetermined level. Therefore, when the entry condition C3 is satisfied, the vehicle driving assistance apparatus 10 executes the autonomous driving control such that the host vehicle 100 does not decelerate more than the predetermined level. In particular, when the entry condition C3 is satisfied, the vehicle driving assistance apparatus 10 executes the autonomous driving control such that the host vehicle 100 does not decelerate more than the predetermined level by not executing the coasting control.

Next, the vehicle driving assistance apparatus 10 proceeds with the process to a step S1895 to terminate the process of this routine once.

On the other hand, when the entry condition C3 is not satisfied, the vehicle driving assistance apparatus 10 determines "No" at the step S1805 and proceeds with the process to a step S1815 to determine whether or not the coasting start condition C4 is satisfied.

When the coasting start condition C4 is not satisfied, the vehicle driving assistance apparatus 10 determines "No" at the step S1815 and proceeds with the process directly to the step S1895 to terminate the process of this routine once. In this case, the propelling control is continued. On the other hand, when the coasting start condition C4 is satisfied, the vehicle driving assistance apparatus 10 determines "Yes" at the step S1815 and proceeds with the process to a step S1820 to determine whether or not a coasting permission condition C7 is satisfied.

The coasting permission condition C7 is satisfied when a predicted deceleration rate Gd_p is smaller than a predetermined deceleration rate threshold Gd_th in a situation where the propelling control is being executed. On the other hand, the coasting permission condition C7 is satisfied when a detected deceleration rate Gd_d is smaller than the predetermined deceleration rate threshold Gd_th in a situation where the coasting control is being executed.

The predicted deceleration rate Gd_p is a deceleration rate of the host vehicle 100 which is predicted to occur when the propelling control is switched to the coasting control at the present time. The vehicle driving assistance apparatus 10 predicts a deceleration rate of the host vehicle 100 based on the current host vehicle speed V1 and the road gradient θ or the like, and acquires the predicted deceleration rate as the predicted deceleration rate Gd_p.

Also, the detected deceleration rate Gd_d is a current deceleration rate of the host vehicle 100. When the acceleration rate G detected by the acceleration rate sensor 62 is smaller than zero, the vehicle driving assistance apparatus 10 acquires an absolute value of the detected acceleration rate G as the detected deceleration rate Gd_d.

At the time when the vehicle driving assistance apparatus 10 proceeds with the process to the step S1820, the propelling control has been executed. Therefore, the coasting permission condition C7 is satisfied when the predicted deceleration rate Gd_p is smaller than the predetermined deceleration rate threshold Gd_th.

When the coasting permission condition C7 is not satisfied, the vehicle driving assistance apparatus 10 determines "No" at the step S1820 and proceeds with the process directly to the step S1895 to terminate the process of this routine once. In this case, the propelling control is continued. That is, when a deceleration rate (that is, the predicted deceleration rate Gd_p) of the host vehicle 100 by execution of the coasting control is equal to or greater than the predetermined deceleration rate threshold Gd_th, the vehicle driving assistance apparatus 10 does not execute the coasting control.

On the other hand, when the coasting permission condition C7 is satisfied, the vehicle driving assistance apparatus 10 determines "Yes" at the step S1820 and proceeds with the process to a step S1825 to stop the propelling control. Next, the vehicle driving assistance apparatus 10 proceeds with the process to a step S1830 to start the coasting control. Next, the vehicle driving assistance apparatus 10 proceeds with the process to the step S1895 to terminate the process of this routine once.

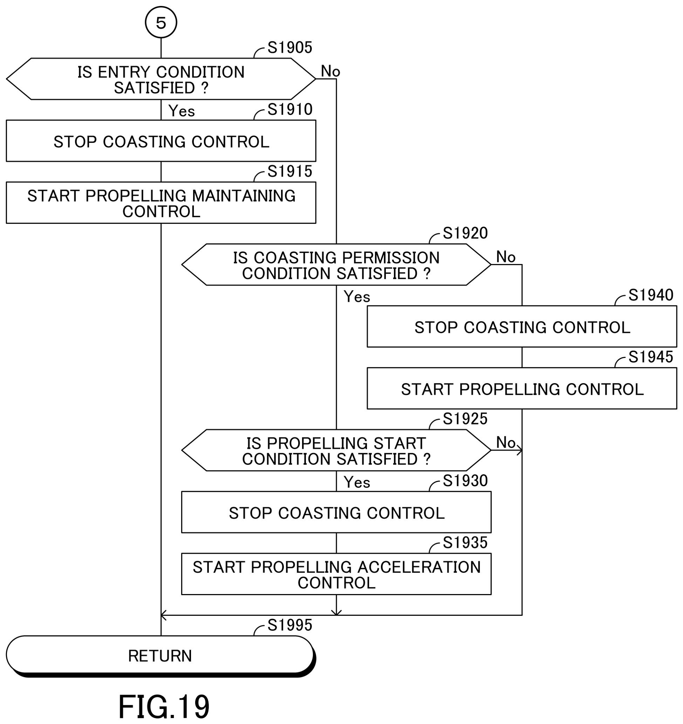

Also, in a situation where the vehicle driving assistance apparatus 10 has executed the coasting control at the time when it proceeds with the process to the step S1710 shown in FIG. 17, the vehicle driving assistance apparatus 10 determines "No" at the step S1710 and proceeds with the process to a step S1905 shown in FIG. 19 to determine whether or not the entry condition C3 is satisfied.

When the entry condition C3 is satisfied, the vehicle driving assistance apparatus 10 determines "Yes" at the step S1905 and proceeds with the process to a step S1910 to stop the coasting control. Next, the vehicle driving assistance apparatus 10 proceeds with the process to a step S1915 to start the propelling maintaining control. While the entry condition C3 is satisfied, the vehicle driving assistance apparatus 10 continues the propelling maintaining control.

That is, when the entry condition C3 is satisfied, the vehicle driving assistance apparatus 10 stops the coasting control. According to this, it is suppressed that the host vehicle 100 decelerates more than a predetermined level. Therefore, when the entry condition C3 is satisfied, the vehicle driving assistance apparatus 10 executes the autonomous driving control such that the host vehicle 100 does not decelerate more than the predetermined level. In particular, when the entry condition C3 is satisfied, the vehicle driving assistance apparatus 10 executes the autonomous driving control such that the host vehicle 100 does not decelerate more than the predetermined level by not executing the coasting control.

Next, the vehicle driving assistance apparatus 10 proceeds with the process to a step S1995 to terminate the process of this routine once.

On the other hand, when the entry condition C3 is not satisfied, the vehicle driving assistance apparatus 10 determines "No" at the step S1905 and proceeds with the process to a step S1920 to determine whether or not the coasting permission condition C7 is satisfied.

At the time when the vehicle driving assistance apparatus 10 proceeds with the process to the step S1920, the coasting control has been executed. Therefore, the coasting permission condition C7 is satisfied when the detected deceleration rate Gd_d is smaller than a predetermined deceleration rate threshold Gd_th.

When the coasting permission condition C7 is satisfied, the vehicle driving assistance apparatus 10 determines "Yes" at the step S1920 and proceeds with the process to a step S1925 to determine whether or not the propelling start condition C6 is satisfied.

When the propelling start condition C6 is not satisfied, the vehicle driving assistance apparatus 10 determines "No" at the step S1925 and proceeds with the process directly to the step S1995 to terminate the process of this routine once. In this case, the coasting control is continued. On the other hand, when the propelling start condition C6 is satisfied, the vehicle driving assistance apparatus 10 determines "Yes" at the step S1925 and proceeds with the process to a step S1930 to stop the coasting control. Next, the vehicle driving assistance apparatus 10 proceeds with the process to a step S1935 to start the propelling acceleration control. Next, the vehicle driving assistance apparatus 10 proceeds with the process to the step S1995 to terminate the process of this routine once.

Also, in a situation where the coasting permission condition C7 is not satisfied at the time when the vehicle driving assistance apparatus 10 proceeds with the process to the step S1920, the vehicle driving assistance apparatus 10 determines "No" at the step S1920 and proceeds with the process to a step S1940 to stop the coasting control. Next, the vehicle driving assistance apparatus 10 proceeds with the process to a step S1945 to start the propelling control. That is, when a deceleration rate (that is, the detected deceleration rate Gd_d) of the host vehicle 100 by execution of the coasting control is equal to or greater than the predetermined deceleration rate threshold Gd_th, the vehicle driving assistance apparatus 10 does not execute the coasting control.

Next, the vehicle driving assistance apparatus 10 proceeds with the process to the step S1995 to terminate the process of this routine once.

It should be noted that, in a situation where the vehicle driving assistance apparatus 10 has executed the autonomous vehicle speed control at the time when it starts the propelling control at the step S1945, the vehicle driving assistance apparatus 10 may be configured to execute the propelling control such that the host vehicle speed V1 at that time is maintained. Also, in a situation where the vehicle driving assistance apparatus 10 has executed the autonomous inter-vehicle distance control at the time when it starts the propelling control at the step S1945, the vehicle driving assistance apparatus 10 may be configured to execute the propelling control such that the inter-vehicle distance D at that time is maintained.

Also, in a situation where the execution request condition C1 is not satisfied at the time when the vehicle driving assistance apparatus 10 proceeds with the process to the step S1705 shown in FIG. 17, the vehicle driving assistance apparatus 10 determines "No" at the step S1705 and proceeds with the process to a step S1715. In a situation where the vehicle driving assistance apparatus 10 has executed the autonomous driving control at the time when it proceeds with the process to the step S1715, the vehicle driving assistance apparatus 10 stops the autonomous driving control. Next, the vehicle driving assistance apparatus 10 proceeds with the process to a step S1795 to terminate the process of this routine once.

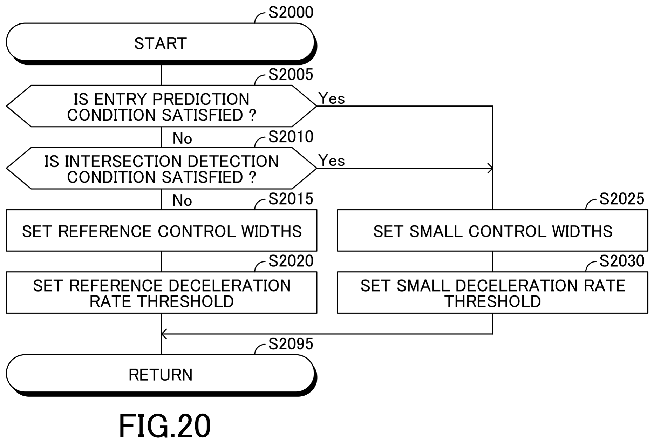

Further, at a predetermined timing, the vehicle driving assistance apparatus 10 starts processing from a step S2000 of the routine shown in FIG. 20. Then, the vehicle driving assistance apparatus 10 proceeds with the process to a step S2005 to determine whether or not the entry prediction condition C2 is satisfied.

When the entry prediction condition C2 is satisfied, the vehicle driving assistance apparatus 10 determines "Yes" at the step S2005 and proceeds with the process to a step S2025. On the other hand, when the entry prediction condition C2 is not satisfied, the vehicle driving assistance apparatus 10 determines "No" at the step S2005 and proceeds with the process to a step S2010 to determine whether or not the intersection detection condition C5 is satisfied.

When the intersection detection condition C5 is satisfied, the vehicle driving assistance apparatus 10 determines "Yes" at the step S2010 and proceeds with the process to the step S2025. On the other hand, when the intersection detection condition C5 is not satisfied, the vehicle driving assistance apparatus 10 determines "No" at the step S2010 and proceeds with the process to a step S2015 to set a reference vehicle speed control width WV_b as the target vehicle speed control width WVtgt and sets a reference inter-vehicle distance control width WD_b as the target inter-vehicle distance control width WDtgt.

In this example, the set vehicle speed control width WVset is set as the reference vehicle speed control width WV_b. Also, in this example, the set inter-vehicle distance control width WDset is set as the reference inter-vehicle distance control width WD_b.

Next, the vehicle driving assistance apparatus 10 proceeds with the process to a step S2020 to set a reference deceleration rate threshold Gd_b as the predetermined deceleration rate threshold Gd_th. Next, the vehicle driving assistance apparatus 10 proceeds with the process to a step S2095 to terminate the process of this routine once.

On the other hand, when the vehicle driving assistance apparatus 10 proceeds with the process to the step S2025, the vehicle driving assistance apparatus 10 sets a small vehicle speed control width WV_s as the target vehicle speed control width WVtgt and sets a small inter-vehicle distance control width WD_s as the target inter-vehicle distance control width WDtgt.

In this example, the reference vehicle speed control width WV_b is set to a value greater than the small vehicle speed control width WV_s. Therefore, when the host vehicle 100 travels on an ordinary road, the vehicle driving assistance apparatus 10 sets the small vehicle speed control width WV_s, which is smaller than the set vehicle speed control width WVset set by the driver, as the target vehicle speed control width WVtgt.

Also, the reference inter-vehicle distance control width WD_b is set to a value greater than the small inter-vehicle distance control width WD_s. Therefore, when the host vehicle 100 travels on an ordinary road, the vehicle driving assistance apparatus 10 sets the small inter-vehicle distance control width WD_s, which is smaller than the set inter-vehicle distance control width WDset set by the driver, as the target inter-vehicle distance control width WDtgt.

Therefore, when the entry prediction condition C2 is satisfied or when the intersection detection condition C5 is satisfied, as compared with a case where neither the entry prediction condition C2 nor the intersection detection condition C5 is satisfied, the host vehicle 100 is driven by the autonomous driving control within a narrower target vehicle speed range RVtgt or within a narrower target inter-vehicle distance range RDtgt.

It should be noted that, although the small vehicle speed control width WV_s is set to a value smaller than the reference vehicle speed control width WV_b, the small vehicle speed control width WV_s is set to a value greater than zero. Similarly, although the small inter-vehicle distance control width WD_s is set to a value smaller than the reference inter-vehicle distance control width WD_b, the small inter-vehicle distance control width WD_s is set to a value greater than zero.

According to this, when the entry prediction condition C2 is satisfied, the target vehicle speed range RVtgt is set to a narrower range as compared with the target vehicle speed range RVtgt when the entry prediction condition C2 is not satisfied. Also, when the entry prediction condition C2 is satisfied, the target inter-vehicle distance range RDtgt is set to a narrower range as compared with the target inter-vehicle distance range RDtgt when the entry prediction condition C2 is not satisfied. In this way, when the target vehicle speed range RVtgt and the target inter-vehicle distance range RDtgt are set to narrower ranges, an execution time of the coasting control becomes short. Therefore, it is suppressed that the host vehicle 100 decelerates more than a predetermined level.

As described above, when the entry prediction condition C2 is satisfied, the vehicle driving assistance apparatus 10 controls the host vehicle 100 so as not to decelerate more than the predetermined level by setting the target vehicle speed range RVtgt or the target inter-vehicle distance range RDtgt to a narrower range as compared with the target vehicle speed range RVtgt or the target inter-vehicle distance range RDtgt when the entry prediction condition C2 is not satisfied.

Next, the vehicle driving assistance apparatus 10 proceeds with the process to a step S2030 to set a small deceleration rate threshold Gd_s as the predetermined deceleration rate threshold Gd_th.

In this example, the reference deceleration rate threshold Gd_b is set to a value greater than the small deceleration rate threshold Gd_s. Therefore, when the entry prediction condition C2 is satisfied or when the intersection detection condition C5 is satisfied, as compared with a case where neither the entry prediction condition C2 nor the intersection detection condition C5 is satisfied, the host vehicle 100 is driven by the autonomous driving control within a range of smaller deceleration.

It should be noted that, although the small deceleration rate threshold Gd_s is set to a value smaller than the reference deceleration rate threshold Gd_b, the small deceleration rate threshold Gd_s is set to a value greater than zero.

According to this, when the entry prediction condition C2 is satisfied, the predetermined deceleration rate threshold Gd_th is set to a smaller value as compared with the predetermined deceleration rate threshold Gd_th when the entry prediction condition C2 is not satisfied. In this way, when the predetermined deceleration rate threshold Gd_th is set to a smaller value, it is suppressed that the host vehicle 100 decelerates more than a predetermined level.

As described above, when the entry prediction condition C2 is satisfied, the vehicle driving assistance apparatus 10 controls the host vehicle 100 so as not to decelerate more than the predetermined level by setting the predetermined deceleration rate threshold Gd_th to a smaller value as compared with the predetermined deceleration rate threshold Gd_th when the entry prediction condition C2 is not satisfied.

Next, the vehicle driving assistance apparatus 10 proceeds with the process to the step S2095 to terminate the process of this routine once.

According to this, when the entry prediction condition C2 is satisfied or when the entry condition C3 is satisfied, an execution time of the coasting control becomes relatively short. Therefore, it is suppressed that the host vehicle 100 greatly decelerates. Accordingly, an occurrence of misunderstanding that the driver of the host vehicle 100 has permitted another moving body such as another vehicle 300 to enter into the host vehicle traveling lane LN1 is more reliably suppressed, and thereby unnecessary execution of the coasting control can be prevented.

Also, when a deceleration rate of the host vehicle 100 is great during execution of the coasting control, the coasting control is stopped. Also, when a deceleration rate of the host vehicle 100 by execution of the coasting control is predicted to be great, the coasting control is not executed. Therefore, it is suppressed that the host vehicle 100 greatly decelerates. Accordingly, an occurrence of misunderstanding that the driver of the host vehicle 100 has permitted another moving body such as another vehicle 300 to enter into the host vehicle traveling lane LN1 is more reliably suppressed, and thereby unnecessary execution of the coasting control can be prevented.

## Claims

1. A vehicle driving assistance apparatus (10) comprising an electronic control unit (90) which executes an autonomous driving control of autonomously driving a host vehicle (100) by alternately executing a propelling control of propelling the host vehicle (100) by a driving force and a coasting control of causing the host vehicle (100) to coast,
wherein the electronic control unit (90) is configured to execute the autonomous driving control such that the host vehicle (100) does not decelerate more than a predetermined level when an entry prediction condition, which is satisfied when a moving body exists in a traveling direction of the host vehicle (100) and it is predicted that the moving body (300, 350) enters into a host vehicle traveling lane in which the host vehicle (100) is traveling, is satisfied, or when an entry condition, which is satisfied when the moving body (300, 350) has started to enter into the host vehicle traveling lane, is satisfied.

2. The vehicle driving assistance apparatus (10) according to claim 1, wherein the electronic control unit (90) is configured to control the host vehicle (100) so as not to decelerate more than the predetermined level by not executing the coasting control.

3. The vehicle driving assistance apparatus (10) according to claim 1,
wherein the electronic control unit (90) is configured to:
alternately execute the propelling control and the coasting control such that a traveling speed of the host vehicle (100) or an inter-vehicle distance between the host vehicle (100) and a preceding vehicle (200) falls within a predetermined range of speed or distance during execution of the autonomous driving control; and
when the entry prediction condition is satisfied, control the host vehicle (100) so as not to decelerate more than the predetermined level by setting the predetermined range to a narrower range as compared with the predetermined range when the entry prediction condition is not satisfied.

4. The vehicle driving assistance apparatus (10) according to claim 1,
wherein the electronic control unit (90) is configured to:
not execute the coasting control when a deceleration rate of the host vehicle (100) caused by execution of the coasting control is equal to or greater than a predetermined deceleration rate threshold; and
when the entry prediction condition is satisfied, control the host vehicle (100) so as not to decelerate more than the predetermined level by setting the predetermined deceleration rate threshold to a smaller value as compared with the predetermined deceleration rate threshold when the entry prediction condition is not satisfied.

5. The vehicle driving assistance apparatus (10) according to claim 1, wherein the electronic control unit (90) is configured to predict that the moving body (300, 350) enters into the host vehicle traveling lane when an entry-possible region into which the moving body (300, 350) can enter exists on an opposite side of the moving body (300, 350) across the host vehicle traveling lane and the moving body (300, 350) moves slowly or stops on the opposite side of the entry-possible region across the host vehicle traveling lane.

6. The vehicle driving assistance apparatus (10) according to claim 1, wherein the electronic control unit (90) is configured to predict that the moving body (300, 350) enters into the host vehicle traveling lane when the moving body (300, 350) moves slowly toward or stops facing the host vehicle traveling lane in a region adjacent to the host vehicle traveling lane.
